# EUROPEAN PATENT SPECIFICATION

(11) **EP 1 334 873 B1**
(45) Date of publication and mention of the grant of the patent: **10.10.2007**
(21) Application number: 03075405.5
(22) Date of filing: 11.02.2003
(51) Int. Cl.: B60R 1/078

(54) **Vehicle rear view mirror assembly**
Kraftfahrzeugrückblickspiegel
Rétroviseur de véhicule

(30) Priority: 11.02.2002 NL 1019938
(43) Date of publication of application: 13.08.2003
(73) Proprietor: Reich KG, 35713 Eschenburg-Wissenbach (DE)
(72) Inventor: Staats, Kees Jan, 6721 XX Bennekom (NL)
(74) Representative: Jorritsma, Ruurd

(56) References cited:
- WO-A-01/36233
- WO-A-03/003096
- DE-A- 4 224 306
- US-A- 3 788 734
- US-A- 5 056 905
- US-A- 5 724 199

## Description

The present invention relates to a mirror assembly according to the preamble of claim 1.

A mirror assembly of this type is generally known in the state of the art e.g US-A-3 788 734. Mirror assemblies of this type are used when towing vehicles that are wider than the towing vehicle. This applies in particular to cars which are used to tow caravans, boat trailers and the like. With these assemblies so-called surface-mounted mirrors are used that are fitted by means of fixing means to the existing mirrors or wings/wing mirror constructions or the like of the towing vehicle.

US patent 5 724 199 shows a retroactively fitted removable mirror with quick-fit fixing means.

Because mirrors of this type are, in principle, an appreciable distance away from the side of the vehicle, adjustment thereof is difficult. Even should the driver be able to make adjustments via the front or side opening window, he or she will then still have to change his or her position appreciably from the normal driving position, so that in any event it is not possible in the case of mirror assemblies according to the state of the art to adjust the mirror from the driver's seat.

US 3 788 734 discloses a rear view mirror that can be fitted on the wing of a vehicle and is a relatively large distance away from the driver. An electric drive for the actual mirror is fitted in the mirror housing, which drive is connected to a control panel with the aid of a cable running through the wing to the driver's cab. This control panel is connected to the battery of the vehicle.

DE 42 24 306 A1 discloses a mirror that can be fitted on a vehicle in an arbitrary location with the aid of a magnet. It can be seen from the figure that the electric adjuster motor fitted therein can be controlled via an electric cable and a switch. The power source is the vehicle battery.

All these systems have the disadvantage that separate wiring has to be installed between the mirror and the vehicle compartment in which the switch is located for controlling the remote mirror.

US 5 056 905 A discloses a mirror assembly which is operated by a transmitter being fixed to the rear end of the trailer of a vehicle. At negotiating a bend the signal emitted from the transmitter is received resulting in rotation of the mirror around a vertical axis.

WO 01/362333 A1 discloses a communications apparatus comprising a control unit and a communication unit to be coupled to side mirrors.

The aim of the present invention is to avoid the aforementioned disadvantages. According to the present invention this is realised by the features of claim 1.

In order to avoid wiring as far as possible, according to the invention the control means are of wireless construction. That is to say there is a wireless remote control by means of which the mirror surface can be moved without wires from the passenger compartment by a driver or another person. To this end the mirror housing can advantageously be provided with a sensor for receiving a signal originating from said control means. This sensor is preferably oriented towards the passenger compartment when the mirror assembly has been fitted. This sensor and, respectively, remote control can operate by infrared or radiographically. According to a particular embodiment of the invention, the sensor is fitted behind the mirror glass of the mirror. To this end it is possible for part of the mirror not to be provided with the reflective coating.

According to an advantageous embodiment of the invention, the distance between the motor means and the control means is at least approximately 15 cm. More particularly, this distance is at least 30 cm. Depending on the driver's seat with respect to the mirror on the left/right, in the extreme case this distance can be up to 2 to 3 metres.

The electric motor that is used for adjustment of the mirror surface with respect to the mirror housing can be fitted in any location and provide for movement of the mirror surface with respect to the mirror housing with the aid of cables, rods and the like. According to an advantageous embodiment, such a motor is, however, fitted in the mirror housing.

According to the invention, the construction is made independent of the existing power supply of the vehicle. That is to say the mirror assembly has its own power supply for the motor means in the form of a battery that is accommodated in the mirror housing and the electric circuit for control of the mirror is constructed such that this is normally in a power save mode in which the current consumption is particularly low. As a result a single battery can operate for one or more years. The mirror housing is advantageously provided with a cover that can be removed easily in order to gain access to the battery compartment.

Preferably, the remote control is so constructed that this can be used for two mirrors (left and right). So as to be able to use identical constructions for at least the control of the mirror adjustment for both mirrors, according to an advantageous embodiment provision is made that either the remote control or the mirror control is so constructed that left/right and top/bottom are stored only after fitting. After all, when fitted on the left or the right they will be reversed as far as top and bottom and right and left are concerned. As a result of storing once, either in the remote control or in the circuit in the mirror, subsequent control with the aid of the remote control can be carried out in a logical manner.

To prevent interference with other vehicles, the range of the remote control is limited. This is preferably less than 3 m. As a result of such a construction there is no difference between mounting the mirror assembly according to the invention and a conventional auxiliary mirror that is used by drivers when a specific width of the towed vehicle is exceeded.

Fixing of the mirror assembly according to the invention to the vehicle can be carried out in any way known in the state of the art. Similarly, all accessories known in the state of the art, such as adjustability, de-icing, heating and the like can be present.

Although the invention is preferably used as a caravan mirror, it will be understood that other applications are conceivable. A particular application is the use of the mirror near the rear of a vehicle. If a driver wants to couple a towing vehicle to a towed vehicle without further assistance, the towing vehicle must be positioned accurately with respect to the towed vehicle, certainly in the case of a relatively heavy towed vehicle. By making use of a mirror on the rear of the towing vehicle, the mutual positions of, for example, towing hook and towbar can be accurately determined. Since such a mirror can be remotely controlled, the driver is easily able to adjust such a mirror.

The invention also relates to a mirror assembly for subsequent fitting on a vehicle, which mirror assembly is provided with fixing means for direct fixing to a door or the like of a vehicle, as well as a mirror housing provided with a mirror surface. Such mirror assemblies can replace existing mirror assemblies in the event of damage, or, if there are no mirror assemblies, the mirrors can still be equipped with mirror assemblies. According to the present invention electric motor means are fitted which operate between said fixing means and said mirror surface, control means being present to control said motor means, which control means comprise wireless control means. That is to say, when such a mirror assembly, that can be of universal construction, is fitted, it is not necessary to install wiring because the motor means can be controlled via a remote control from the driver's compartment.

The invention will be explained in more detail below with reference to an illustrative embodiment shown in the drawing. In the drawing:
Fig. 1 shows a perspective view of a combination of towing vehicle/towed vehicle equipped with a mirror according to the invention;
Fig. 2 shows a perspective view of the mirror assembly according to the present invention; and
Fig. 3 shows a detail of the mirror housing according to the invention in a partially exposed view.

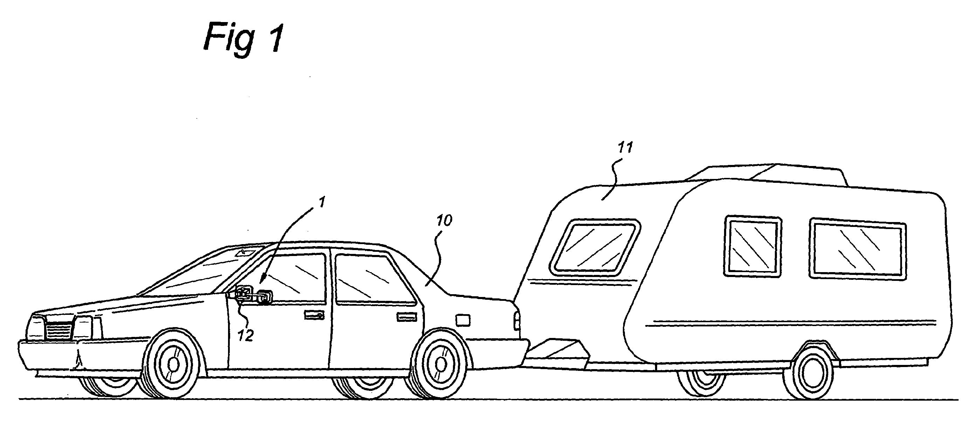

In Fig. 1 a towing vehicle is indicated by 10 and a caravan behind it is indicated by 11. 12 indicates the existing mirror to which a mirror assembly 1 according to the present invention has been fixed. In the case shown only fixing to the existing mirror 12 is involved. It is, of course, possible to fix the mirror assembly to the vehicle in another way, such as, for example to the wing or door. The common feature of such mirror assemblies is that these are easy to connect to and disconnect from the vehicle. Preferably, no or hardly any special tools are needed for this purpose. This is in contrast to fixed mirrors on the vehicle, where the aim is that these are permanently fixed to the vehicle, and which mirrors do not protrude excessively from the vehicle. The mirror assembly according to the present invention protrudes substantially from the vehicle. By way of example, a value of approximately 10 - 30 cm is mentioned for the distance from the innermost part of the mirror surface to the side window or side screen of the vehicle. Bands can be used to fix the arm to the vehicle.

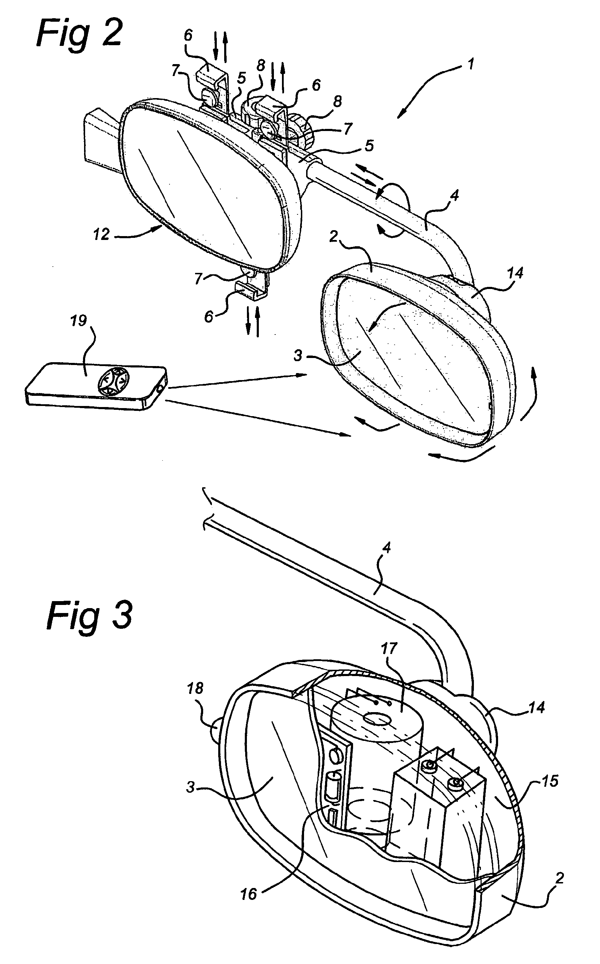

Details of the mirror assembly 1 are shown in Fig. 2. This assembly consists of an arm 4 to which a mirror housing 2 is fixed via pivot 14. At the other end arm 4 is provided with clamps 5 which can be set in a specific position with the aid of locking screws 8. These clamps are provided with hooks 6 which, for example, are able to engage around the existing mirror. The mutual height setting can be fixed with the aid of the locking screws 8. Suction cups that provide grip can optionally be present. It must be understood that other methods of fixing are also possible.

Mirror surface 3 is located in mirror housing 2. It is possible that the mirror housing, with mirror surface, is adjustable with respect to the pivot 14 on arm 4. However, it is also possible that the mirror housing is rigidly fixed to arm 4 and the mirror surface 3 can be moved inside housing 2. A combination of these variants or other embodiments for example with telescoping arm(s) are also possible. In all cases an electric motor 17 operates between the mirror surface 3 and arm 4, with or without the intervention of housing 2, which electric motor 17 has an adjustment mechanism, not shown in detail, by means of which the position of the mirror surface 3 with respect to arm 4 can be changed. This construction is made such that if the motor is not operational, the various features can be adjusted externally by hand. Apart from a motor 17, there is a compartment 15 in the mirror housing 2 for a battery. Moreover, a control 16 is present that is powered by the battery to be placed in the compartment 15 and is connected to the adjuster motor 17 and to a sensor 18. As can be seen from Fig. 2, there is a remote control 19 by means of which sensor 18 can be activated by radiographic means or other wireless means and as a result the mirror surface 3 can be set with respect to arm 4 from the driver's seat. Instead of a single motor 17 it is also possible to use various adjuster motors, for example one motor for movement in the horizontal direction and one motor for movement in the vertical direction.

Preferably, the mirror assembly according to the invention is so constructed that this can be used either on the left or the right without modifications. Moreover, access can easily be obtained to the battery, so that this can be easily replaced. The effect of the remote control is only limited. That is to say, there is no risk of mirrors on other vehicles being controlled. Furthermore, the various features are preferably made direction-sensitive, so that it is not possible simultaneously to control a left and a right mirror on one vehicle. The various features can also be implemented with the aid of a selector switch for left/right. The adjustment of the mirror surface 3 with respect to the arm 4 can comprise all constructions that are known in the state of the art for electrically adjustable mirrors that are fixed to a motor vehicle.

The construction described here can have many variants. For instance, in principle, it is possible to make the position of the arm with respect to the fixing on the vehicle unchangeable. That is to say, once the mirror has been adjusted, when this is removed from the vehicle and re-fitted it will, in principle, be positioned in the same way and no rotation of arm 4 about the longitudinal axis thereof will take place. Grooves or the like can be made in arm 4 for this purpose.

## Claims

1. Mirror assembly (1) comprising a mirror housing (2) provided with a mirror surface (3) as well as at least one arm (4), the mirror surface (3) being adjustable relative to said arm (4), the free end of said arm (4) being provided with quick-fit fixing means (5-7) for fixing to a vehicle (10), operational electric motor means (17) being arranged between said arm (4) and said mirror surface (3) for mutual adjustment of the mirror surface (3) with respect to said arm (4) and there being operational control means (16, 19) for said electric motor means (17), **characterised in that** said control means comprise wireless control means (19) spaced from said arm (4) and said mirror housing (2) and a control unit (16) placed in said mirror housing (2), said control unit (16) being powered by a battery placed in a battery compartment (15) of the mirror housing (2) and **in that** the electric circuit for the control of the mirror is constructed such that it is normally in a power save mode.

2. Mirror assembly (1) according to Claim 1, wherein the distance from said electric motor means (17) to said wireless control means (19) is at least 15 cm.

3. Mirror assembly (1) according to any one of the preceding claims, wherein said electric motor means (17) are fitted in the mirror housing (2).

4. Mirror assembly (1) according to any one of the preceding claims, wherein said mirror housing (2) is provided with a sensor (18) which, in the fitted position on the vehicle (10), is oriented towards the driver's seat in said vehicle (10).

5. Mirror assembly (1) according to any one of the preceding claims, wherein said quick-fit fixing means (5-7) for said arm (4) comprise an accomodation (6) for an existing mirror (12) of the vehicle (10).

## Patentansprüche

1. Spiegelbaugruppe (1) mit einem Spiegelgehäuse (2), das mit einer Spiegelfläche (3) sowie zumindest einem Arm (4) versehen ist, wobei die Spiegelfläche (3) relativ zu dem Arm (4) einstellbar ist, das freie Ende des Arms (4) mit Schnell-Befestigungseinrichtungen (5-7) zur Befestigung an einem Fahrzeug (10) versehen ist, betätigbare Elektromotoreinrichtungen (17) zwischen dem Arm (4) und der Spiegelfläche (3) vorgesehen sind, um die Spiegelfläche (3) bezüglich des Arms (4) einzustellen, und betätigbare Steuereinrichtungen (16, 19) für die Elektromotoreinrichtungen (17) vorgesehen sind, **dadurch gekennzeichnet, dass** die Steuereinrichtungen Drahtlos-Steuereinrichtungen (19), die von dem Arm (4) und dem Spiegelgehäuse (2) beabstandet sind, und eine Steuereinheit (16) beinhalten, die in dem Spiegelgehäuse (2) angeordnet ist, wobei die Steuereinheit (16) durch eine Batterie gespeist wird, die sich in einem Batteriefach (15) des Spiegelgehäuses (2) befindet, und dass die elektrische Schaltung zur Steuerung des Spiegels so ausgestaltet ist, dass sie sich normalerweise in einem Energiesparmodus befindet.

2. Spiegelbaugruppe (1) nach Anspruch 1, bei der die Distanz zwischen den Elektromotoreinrichtungen (17) und den Drahtlos-Steuereinrichtungen (19) mindestens 15 cm beträgt.

3. Spiegelbaugruppe (1) nach einem der vorhergehenden Ansprüche, bei der die Elektromotoreinrichtungen (17) in dem Spiegelgehäuse (2) vorgesehen sind.

4. Spiegelbaugruppe (1) nach einem der vorhergehenden Ansprüche, bei der das Spiegelgehäuse (2) mit einem Sensor (18) versehen ist, der, in der angebrachten Position an dem Fahrzeug (10), in Richtung auf den Sitz des Fahrers in dem Fahrzeug (10) ausgerichtet ist.

5. Spiegelbaugruppe (1) nach einem der vorhergehenden Ansprüche, bei dem die Schnell-Befestigungseinrichtungen (5-7) für den Arm (4) eine Aufnahme (6) für einen vorhandenen Spiegel (12) des Fahrzeugs (10) aufweisen.

## Revendications

1. Rétroviseur (1) comprenant un boîtier de rétroviseur (2) muni d'un miroir (3) et d'au moins un bras (4), le miroir (3) étant réglable par rapport audit bras (4), l'extrémité libre dudit bras (4) étant munie de moyens de fixation rapide (5 à 7) permettant de le fixer à un véhicule (10), un moteur électrique opérationnel (17) étant installé entre ledit bras (4) et ledit miroir (3) afin d'ajuster le miroir (3) par rapport audit bras (4), des moyens de commande opérationnels (16, 19) permettant de commander ledit moteur électrique (17), **caractérisé en ce que** lesdits moyens de commande comprennent des moyens de commande sans fil (19) distants dudit bras (4) et dudit boîtier de rétroviseur (2), et une unité de commande (16) placée dans ledit boîtier de rétroviseur (2), l'alimentation électrique de cette unité de commande (16) étant assurée par une batterie placée dans un logement de batterie (15) du boîtier de rétroviseur (2), et **caractérisé en ce que** le circuit électrique de commande du miroir est construit de telle sorte qu'il se trouve normalement en mode d'économie d'énergie.

2. Rétroviseur (1) suivant la revendication 1, dans lequel la distance dudit moteur électrique (17) auxdits moyens de commande sans fil (19) est d'au moins 15 cm.

3. Rétroviseur (1) suivant l'une quelconque des revendications précédentes, dans lequel ledit moteur électrique (17) est installé dans le boîtier de rétroviseur (2).

4. Rétroviseur (1) selon l'une quelconque des revendications précédentes, dans lequel ledit boîtier de rétroviseur (2) est muni d'un capteur (18) qui, lorsque le rétroviseur est installé sur le véhicule (10), est orienté vers le siège conducteur dudit véhicule (10).

5. Rétroviseur (1) suivant l'une quelconque des revendications précédentes, dans lequel lesdits moyens de fixation rapide (5 à 7) dudit bras (4) comprennent un système d'installation (6) sur un rétroviseur existant (12) du véhicule (10).
